# EUROPEAN PATENT SPECIFICATION

(11) **EP 2 999 073 B1**
(45) Date of publication and mention of the grant of the patent: **19.04.2017**
(21) Application number: 15185107.8
(22) Date of filing: 14.09.2015
(51) Int. Cl.: H02G 5/00

(54) **SPACER FOR A JUNCTION BLOCK FOR BUSBARS AND JUNCTION BLOCK COMPRISING SAID SPACER**
DISTANZSTÜCK FÜR EINEN VERBINDUNGSBLOCK FÜR SAMMELSCHIENEN UND VERBINDUNGSBLOCK MIT SOLCH EINEM DISTANZSTÜCK
ENTRETOISE POUR BLOC DE JONCTION DESTINÉ À DES BARRES OMNIBUS ET BLOC DE JONCTION COMPRENANT LADITE ENTRETOISE

(30) Priority: 18.09.2014 IT BS20140168
(43) Date of publication of application: 23.03.2016
(73) Proprietor: CBW S.r.l., 25039 Travagliato (BS) (IT)
(72) Inventor: REGOSA, MATTIA, 25133 BRESCIA (IT)
(74) Representative: Galassi, Alessandro

(56) References cited:
- EP-A1- 2 081 269
- US-A- 4 950 841

## Description

### Technical field

In its most general aspect, the present invention refers to the sector of prefabricated electrical conduits, and it particularly concerns a spacer for a junction block comprising a plurality of conductive plates of the type used in electrically connecting busbars.

The invention also concerns a junction block for busbars of the above-mentioned type and comprising a spacer for separating and supporting the conductive plates of the junction block.

### State of the art

As is known, in the field of prefabricated electrical conduits, the formation of an unbroken electrical path along a desired circuit is realized through the connection of a number of conductive elements, which are also known as busbars, and which comprise conductor bars that extend within a casing.

In particular, the busbars are consecutively joined to each other by means of electrical junction blocks that comprise electrical conductors, such as copper plates, interposed between the conductor bars of two contiguous busbars, and that are mechanically clamped in a stack by means of a lock bolt that passes transversely in the junction block and ensures close contact between the conductor bars of the busbars and the plates of the respective junction box.

It is further known from patent US4950841 an electric power bus removable joint including three spacer-connectors that align the intervening splice plates and insulative plates used to electrically connect between adjoining busway sections. The spacer-connectors attach between the opposing joint face plates without requiring any additional fastening means.

Patent EP2081269 describes an adaptable adjustable track housing, wherein two junctions are adjustable on a carriage and are introduced within housing. Conductive bars of the sections of tracks are engaged, where the junctions are connected within the track housing by conductive bars.

The connection of the busbars by means of junction blocks is generally realized in the course of the installation of the prefabricated electrical conduit, and therefore at a construction site.

In further detail, for installation of the prefabricated electrical conduit, and thus for the electrical connection of the busbars, the lock bolt for locking the junction blocks must be loosened to insert the respective conductive plates between the splayed ends of the conductor bars of two busbars, with the drawback that those same conductive plates tilt or become stuck, making their insertion between the conductor bars difficult.

Realization of the electrical connection between busbars by means of junction blocks is made more difficult by the unfavourable working conditions commonly experienced at a construction site for the installation of prefabricated electrical conduits, including for example uncomfortable positions for workers who are carrying out the electrical connection.

As a result, the need to have available junction blocks for the electrical connection of busbars that enable easy installation of prefabricated electrical conduits is still substantially not met.

### Summary of the invention

The present invention provides means for easy installation of a prefabricated electrical conduit, particularly means having structural and functional characteristics that are such as to overcome the drawbacks mentioned above with reference to the prior art and such as to enable a simplified electrical connection between contiguous busbars of a prefabricated electrical conduit.

Within the scope of certain embodiments, the present invention refers to a spacer for a junction block for busbars, and comprising at least one elongate element having a plurality of projections extending to preset distances one from the other from one same side of the at least one elongate element, and comprising attaching/releasing means (8) for association/removal of the at least one elongate element with/from the above-mentioned junction block.

Said plurality of projections of the elongate element is configured to be interposed between a plurality of conductive plates of the junction block.

Said plurality of projections of the elongate element is preferably configured to keep a plurality of conductive plates of the junction block separated.

Each projection of said plurality of projections is preferably configured to be inserted between a respective pair of adjacent conductive plates of the junction block.

The projections of said plurality of projections are preferably configured to be inserted in spaces, between adjacent conductive plates and designed to house, once the junction block has been installed, the conductor bars of a pair of contiguous busbars, in such a manner as to keep the conductive plates of the junction block separated and supported at the same time.

Each projection of said plurality of projections is preferably configured to be inserted in a respective space, between two respective adjacent conductive plates and designed to house, once the junction block has been installed, corresponding conductor bars of a pair of contiguous busbars, in such a manner as to keep said two respective adjacent conductive plates of the junction block separated and supported at the same time.

The projections of said plurality of projections are preferably shaped in the form of a tooth or a thin plate or a wall or a separating baffle or a protrusion.

Said plurality of projections is preferably shaped in the form of a comb or rack emerging from said same side of the elongate element.

The projections of said plurality of projections are preferably located in positions that are equidistant from each other along the elongate element.

The projections are preferably parallel to each other.

The projections preferably extend parallel to the conductive plates of the junction block.

The elongate element preferably has a longitudinal direction of extension and said projections extend in directions perpendicular to said longitudinal direction of extension.

Said plurality of projections preferably comprises a number of projections equal to the number of spaces between adjacent conductive plates, that is, equal to the number of conductor bars of the busbars that the junction block will be connecting.

In a possible embodiment, said plurality of projections comprises a number of projections equal to the number of conductive plates of the junction block minus one.

In a further possible embodiment, sad plurality of projections comprises a number of projections equal to the number of conductive plates of the junction block plus one, in which the external projections, at the end portions of the elongate element, are configured to be interposed between an external plate and a side wall of the junction block.

Preferably, starting from said side of the elongate element, the projections extend for a length that exceeds by 1/4 or by 1/3 or by 1/2 of the depth of the space between the conductive plates.

The elongate element is preferably configured to be associated with a junction block, with the projections interposed between the conductor bars of the junction block, when the junction block is not mounted to a pair of busbars, and to be removed and moved away from the junction block when the junction block is mounted to, and connects, a pair of busbars. Preferably, the elongate element is removably associated with a junction block.

The above-mentioned attaching/releasing means preferably comprises at least one tooth-shaped element extending from the same side as the above-mentioned plurality of projections at an end portion of the above-mentioned at least one elongate element, more preferably two tooth-shaped elements provided at opposite end portions of the above-mentioned at least one elongate element.

In accordance with the invention, the above-mentioned attaching/releasing means, therefore the at least one tooth-shaped element, is realized as an integral piece with the at least one elongate element, or it is associated, possibly removably, with the at least one elongate element.

The above-mentioned spacer preferably also comprises a control means cooperating with the above-mentioned attaching/releasing means, preferably comprising at least one stepped portion afforded at one end of the above-mentioned at least one elongate element, and by means of this portion, when the user exerts a certain pressure, it is possible
to achieve a slight bending of the at least one elongate element and/or the at least one tooth-shaped element, with relative release from the above-mentioned junction block.

The above-mentioned at least one elongate element preferably has an essentially flat back side opposite the above-mentioned plurality of projections.

The above-mentioned spacer preferably comprises two opposite elongate elements of the above-mentioned type, more preferably they are connected with each other, and yet more preferably they are removably constrained to each other.

Preferably, for the connection between the above-mentioned two elongate elements, the above-mentioned spacer comprises a connecting element, advantageously of a belt type, associated with each one of the above-mentioned elongate elements; however, this does not exclude the possibility of providing a connecting element of a belt type also in a spacer according to the invention comprising only one elongate element of the type considered hereinabove, particularly an elongate element constrained to the belt and thus to the above-mentioned connecting element.

Preferably, at least one and more preferably each one of the above-mentioned two elongate elements comprises at least a first pair of slots for passage of the above-mentioned connecting element and more preferably it also comprises a second pair of slots for passage of the above-mentioned connecting element, in which the first and the second pair of slots are preferably arranged at end portions of the elongate elements.

The above-mentioned connecting element preferably comprises a first portion comprised between, and closed around, the two elongate elements, and a second gripping portion extending, with respect to a first elongate element of the two elongate elements, on the opposite side of the above-mentioned first portion, for transport of the junction block.

The above-mentioned first portion and the above-mentioned second portion of the connecting element are preferably constrained to each other.

The above-mentioned spacer preferably comprises a safety element associated with the above-mentioned connecting element, more preferably associated with the above-mentioned first portion of the connecting element, and more preferably a safety element comprising closure means for tamper-proof closure of the safety element and thus of the above-mentioned first portion of the connecting element.

Within the scope of other embodiments, the present invention refers to a junction block for electrically connecting busbars, and comprising a plurality of conductive plates, isolated from each other, stacked between two side walls and through which a clamping bolt passes, and further comprising a spacer of the above-mentioned type for separating and supporting the conductive plates, in which preferably at least one of the above-mentioned sidewalls has at least one bent edge and in which the above-mentioned attaching/releasing means of the above-mentioned spacer cooperates with the above-mentioned bent edge, that is to say preferably in which the above-mentioned at least one tooth-shaped element engages the above-mentioned bent edge.

The above-mentioned at least one bent edge preferably has a recess, preferably arranged in a middle position on it for housing the above-mentioned at least one tooth-shaped element.

### Brief description of the figures

Further characteristics and advantages of the invention will result to be clearer from an examination of the following detailed description of a preferred, but not exclusive, embodiment illustrated by way of approximate and non-limiting example, with the support of the enclosed drawings, of which:

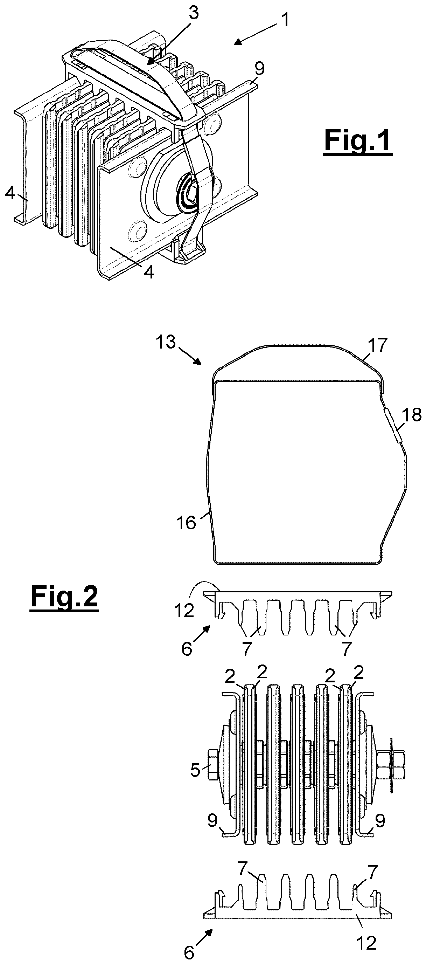

- Figure 1 is a schematic perspective view of a junction block for busbars which comprises a plurality of conductive plates and a spacer for separating the conductive plates, in accordance with the present invention;
- Figure 2 is a front view, in separate parts, of the junction block with the spacer of Figure 1;

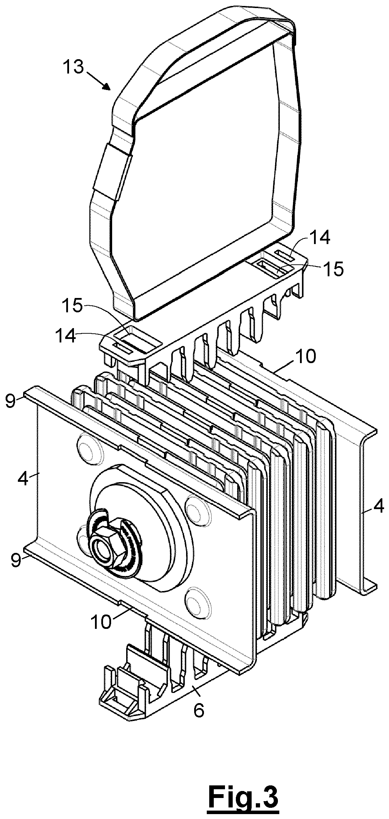

- Figure 3 is a further perspective view, in separate parts, of the junction block with the spacer of Figure 1;

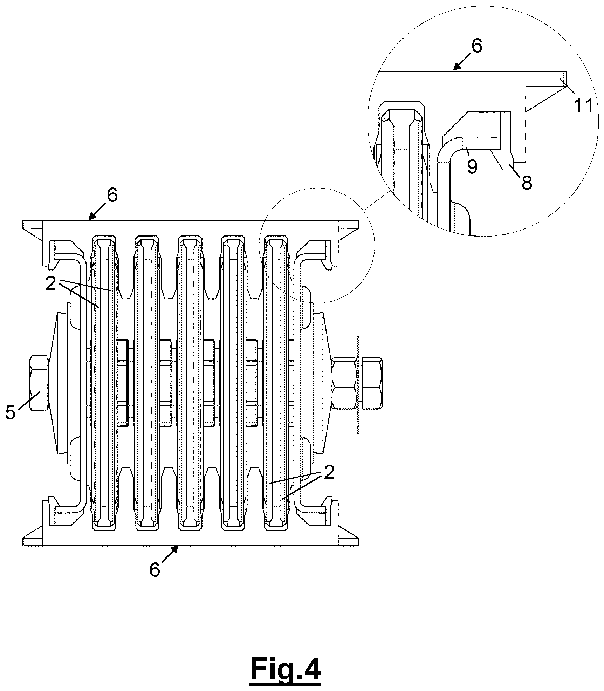

- Figure 4 is a front view of a detail of the junction block with the spacer of Figure 1, with a further detail that is enlarged.

### Detailed description of the invention

With reference to the above-mentioned figures, number 1 indicates, in its entirety, a junction block for electrically connecting busbars of the type equipped with a plurality of conductive plates 2 and comprising a spacer 3 for separating and supporting the conductive plates 2, in accordance with the present invention.

In further detail, the conductive plates 2 are isolated from each other and stacked between two side walls 4 and in the use of the junction block 1, that is to say in electrically connecting the busbars, said plates are interposed between conductor bars of two contiguous busbars.

The junction block 1 further comprises a lock bolt 5 that passes transversely in it, and therefore in the conductive plates 2 and in the side walls 4, and it serves to clamp the conductive plates 2 together, without any clearance and again, in the use of the present junction block, it serves to ensure close contact between the conductive plates 2 and the conductor bars of the busbars.

In accordance with the examples appearing in the figures, the spacer 3 comprises a pair of elongate elements 6, each of which comprising a plurality of tooth-like projections 7 arranged on one same side of the respective elongate element 6.

In particular, the spacer 3 comprises an upper elongate element and a lower elongate element, oppositely arranged at the respective ends of the junction block 1.

In accordance with the invention, each one of the elongate elements 6 comprises attaching/releasing means 8 for associating the spacer 3 with the junction block 1 and for removing it.

Advantageously, in each one of the elongate elements 6, the attaching/releasing means 8 takes on the form of a pair of tooth-shaped elements extending from the same side as the plurality of projections 7 at opposite end portions of the respective elongate element 6.

Once again, the attaching/releasing means 8 and thus the tooth-shaped elements, can be realized as an integral piece with the respective elongate elements 6, or it can be associated, possibly removably, with the elongate elements; in any case, the attaching/releasing means 8 of the spacer 3 is apt for cooperating with the side walls 4 of the junction block 1.

In this regard, each side wall 4 has opposite upper and lower bent edges 9 engaged by the attaching/releasing means 8 and thus by the tooth-shaped elements, each bent edge 9 having a respective recess advantageously arranged in a middle position on the bent edge 9 to facilitate attachment and release of a respective tooth-shaped element.

In particular, to activate the attaching/releasing means 8, the spacer 3 further comprises control means 11, which, advantageously, in accordance with the examples appearing in the figures, take on the form of a stepped portion afforded at the opposite ends of each one of the elongate elements 6, and by means of said portion, when the user exerts a certain pressure, it is possible to achieve a slight bending of the same elongate elements 6, or of the tooth-shaped elements, with resulting release from the side walls 4 of the junction block 1.

Again, as regards the elongate elements 6 of the spacer 3, it should be added that each elongate element 6 comprises an essentially flat underside 12 opposite the plurality of projections 7, and that in accordance with the invention, the two elongate elements 6 are connected to each other by a connecting element 13 that is advantageously of a belt type.

More specifically, for the connection with the connecting element 13, each one of the elongate elements 6 comprises two pairs of slots, and in particular a first pair of slots 14 and a second pair of slots 15 arranged at respective end portions of the elongate elements 6 and that are engaged by the connecting element 13. In particular, the connecting element 13 comprises a first portion 16 essentially comprised between, and closed around, the two elongate elements 6, and a second gripping portion 17 extending, with respect to the upper elongate element on the opposite side of the first portion 16, the second gripping portion 17 also being closed so as to form a handle of sorts, for transport of the junction block 1.

In accordance with the examples appearing in the figures, the first portion 16 and the second portion 17 of the connecting element 13 are constrained to each other.

Again, as regards the spacer 3, it should be added that in accordance with the invention, it comprises a safety element 18 associated with the connecting element 13, particularly associated with the first closure portion 16 of the connecting element 13.

The safety element 18 advantageously comprises closure means for tamper-proof closure of the first portion 16 of the safety element 18, and therefore for the closure of the belt portion that connects the elongate elements 6 of the spacer 3 and that essentially envelops the conductive plates 2 and the side walls 4 of the junction block 1.

Tamper-proof closure means that after the first opening of the safety element and thus of the closure means, the initial state of the latter can no longer be restored, and as a result the belt and particularly the first portion of the connecting element remain open.

Therefore, in accordance with the invention, the present spacer not only makes it possible to keep the conductive plates of the junction block separated and supported at the same time, particularly in the course of electrically connecting the busbars, but owing to the connecting element it further constitutes a gripping and transport means for the junction block, while also constituting a safety means for checking the intactness of the junction block, and in particular it also represents a sort of anti-theft device for preventing, or signalling, the theft of even just one conductive plate of a junction block.

In fact, as is known, the conductive plates of the junction blocks of busbars are copper plates and therefore they are of some value and are often stolen, particularly in environments where meticulous monitoring, or in any case efficient and constant surveillance is difficult, as in the case of construction sites where they are being installed.

The advantages of the present invention, which already appear evident in the description reported hereinabove, can be summarized by observing that a means is made available for easy installation of a prefabricated electrical conduit, and particularly a spacer for a junction block for busbars, and a junction block comprising the spacer, which enable a simplified electrical connection of continuous busbars of a prefabricated electrical conduit.

## Claims

1. A spacer (3) for a junction block (1) for busbars, the junction block having a plurality of conductive plates (2) isolated from each other and stacked between two side walls (4), the spacer comprising at least one elongate element (6) provided with a plurality of projections (7), extending from one same side of said at least one elongate element (6), and provided with attaching/releasing means (8) for association/removal of said at least one elongate element (6) with/from said junction block (1),
**characterized in that** said plurality of projections of the elongate element is configured to be interposed between, and keep separated, said plurality of conductive plates of the junction block.

2. The spacer according to claim 1, wherein each projection of said plurality of projections is configured to be inserted between two adjacent conductive plates of the junction block.

3. The spacer according to claim 1 or 2, wherein the projections of said plurality of projections are configured to be inserted in spaces, between adjacent conductive plates, destined to house, once the junction block has been installed, the conductor bars of a pair of contiguous busbars, in such a manner as to keep the conductive plates of the junction block separated and supported at the same time.

4. The spacer according to any one of the preceding claims, wherein the projections of said plurality of projections are shaped in the form of a tooth or a thin plate or a wall or a separating baffle or a protrusion.

5. The spacer according to any one of the preceding claims, wherein said plurality of projections is shaped in the form of a comb or rack emerging from said same side of the elongate element, and/or wherein the projections are parallel to each other.

6. The spacer according to any one of the preceding claims, wherein said plurality of projections comprises a number of projections equal to the number of spaces between adjacent conductive plates, that is, equal to the number of conductor bars of the busbars that the junction block will be connecting.

7. The spacer according to any one of the preceding claims, wherein the elongate element is configured to be associated with a junction block, with the projections interposed between the conductor plates of the junction block, when the junction block is not mounted to a pair of busbars, and to be removed and moved away from the junction block when the junction block is mounted to, and connects, a pair of busbars.

8. The spacer according to any one of the preceding claims, wherein said attaching/releasing means (8) comprises at least one tooth-shaped element extending from the same side as said plurality of projections (7) at an end portion of said at least one elongate element (6), and/or wherein the spacer comprises two tooth-shaped elements extending from the same side as said plurality of projections (7) and arranged at opposite end portions of said at least one elongate element (6).

9. The spacer according to any one of the preceding claims, comprising control means (11) cooperating with said attaching/releasing means (8), including at least one stepped portion afforded at one end of said at least one elongate element (6).

10. The spacer according to any one of the preceding claims, comprising two opposite elongate elements (6) and a connecting element (13) for the connection between said two elongate elements (6).

11. The spacer according to claim 10, wherein said connecting element (13) comprises a first portion (16) essentially comprised between, and closed around, said two elongate elements (6), and a second gripping portion (17) extending, with respect to a first elongate element of said two elongate elements (6), on the opposite side of said first portion (16).

12. The spacer according to claim 11, comprising a safety element (18) associated with said first portion (16) of said connecting element (13), wherein said safety element comprises closure means for closure of said connecting element (13).

13. A junction block (1) for electrically connecting busbars, comprising a plurality of conductive plates (2), isolated from each other, stacked between two side walls (4) and through which a clamping bolt (5) passes, and further comprising a spacer (3) according to any one of the preceding claims.

14. The junction block according to claim 13, wherein at least one of said side walls (4) has at least one bent edge (9) cooperating with said attaching/releasing means (8) of said spacer (6).

15. The junction block according to claim 13 or 14, wherein said at least one bent edge (9) has a recess (10), preferably arranged in a middle position on said bent edge (9).

## Patentansprüche

1. Abstandshalter (3) für einen Verbindungsblock (1) für Sammelschienen, wobei der Verbindungsblock eine Mehrzahl von Leiterplatten (2) aufweist, die voneinander isoliert sind und zwischen zwei Seitenwänden (4) gestapelt sind, wobei der Abstandshalter zumindest ein längliches Element (6) aufweist, das mit einer Mehrzahl von Vorsprüngen (7) versehen ist, die sich von einer selben Seite des zumindest einen länglichen Elements (6) erstrecken, und mit Befestigungs-/Lösemitteln (8) zum Zuordnen/Entfernen des zumindest einen länglichen Elements (6) zu/von dem Verbindungsblock (1) versehen ist,
**dadurch gekennzeichnet, dass** die Mehrzahl von Vorsprüngen des länglichen Elements zum Einsetzen zwischen die und Getrennthalten der Mehrzahl von Leiterplatten des Verbindungsblocks konfiguriert ist.

2. Der Abstandshalter nach Anspruch 1, wobei jeder Vorsprung der Mehrzahl von Vorsprüngen zum Einsetzen zwischen zwei benachbarten Leiterplatten des Verbindungsblocks konfiguriert ist.

3. Der Abstandshalter nach Anspruch 1 oder 2, wobei die Vorsprünge der Mehrzahl von Vorsprüngen zum Einsetzen in Zwischenräume zwischen benachbarte Leiterplatten konfiguriert sind, und dazu bestimmt sind, sobald der Verbindungsblock installiert worden ist, die Leiterschienen eines Paars von durchgehenden Sammelschienen derart aufzunehmen, dass die Leiterplatten des Verbindungsblocks gleichzeitig getrennt und getragen bleiben.

4. Der Abstandshalter nach einem der vorhergehenden Ansprüche, wobei die Vorsprünge der Mehrzahl von Vorsprüngen in der Form eines Zahns oder einer dünnen Platte oder einer Wand oder einer Trennplatte oder eines Vorsprungs ausgestaltet sind.

5. Der Abstandshalter nach einem der vorhergehenden Ansprüche, wobei die Mehrzahl von Vorsprüngen in Form eines Kamms oder Rechens, der von derselben Seite des länglichen Elements vorsteht, ausgestaltet ist, und/oder wobei die Vorsprünge zueinander parallel sind.

6. Der Abstandshalter nach einem der vorhergehenden Ansprüche, wobei die Mehrzahl von Vorsprüngen eine Anzahl von Vorsprüngen aufweist, deren Anzahl gleich den Zwischenräumen zwischen benachbarten Leiterplatten ist, d.h. gleich der Anzahl von Leiterschienen der Sammelschienen, die der Verbindungsblock verbinden wird.

7. Der Abstandshalter nach einem der vorhergehenden Ansprüche, wobei das längliche Element, um einem Verbindungsblock zugeordnet zu werden, mit Vorsprüngen konfiguriert ist, die zwischen den Leiterplatten des Verbindungsblocks eingesetzt sind, wenn der Verbindungsblock nicht an einem Paar von Sammelschienen montiert ist, und von dem Verbindungsblock entfernt und wegbewegt werden, wenn der Verbindungsblock an einem Paar von Sammelschienen montiert ist und diese verbindet.

8. Der Abstandshalter nach einem der vorhergehenden Ansprüche, wobei das Befestigungs-/Lösemittel (8) zumindest ein zahnförmiges Element aufweist, das sich von derselben Seite wie die Mehrzahl von Vorsprüngen (7) an einem Endabschnitt des zumindest einen länglichen Elements (6) erstreckt, und/oder wobei der Abstandshalter zwei zahnförmige Elemente aufweist, die sich von derselben Seite wie die Mehrzahl von Vorsprüngen (7) erstrecken und an entgegengesetzten Endabschnitten des zumindest einen länglichen Elements (6) angeordnet sind.

9. Der Abstandshalter nach einem der vorhergehenden Ansprüche, der ein Steuermittel (11) aufweist, das mit dem Befestigungs-/Lösemittel (8) zusammenwirkt, einschließlich zumindest einem Stufenabschnitt, der an einem Ende des zumindest einen länglichen Elements (6) angeordnet ist.

10. Der Abstandshalter nach einem der vorhergehenden Ansprüche, der zwei gegenüberliegende längliche Elemente (6) und ein Verbindungselement (13) für die Verbindung zwischen zwei länglichen Elementen (6) aufweist.

11. Der Abstandshalter nach Anspruch 10, wobei das Verbindungselement (13) einen ersten Abschnitt (16), der im Wesentlichen zwischen den und eng um die zwei länglichen Elemente (6) herum vorgesehen ist, sowie einen zweiten Greifabschnitt (17), der sich in Bezug auf das erste längliche Element der zwei länglichen Elemente (6) an der entgegengesetzten Seite des ersten Abschnitts (16) erstreckt, aufweist.

12. Der Abstandshalter nach Anspruch 11, der ein Sicherheitselement (18) aufweist, das dem ersten Abschnitt (16) des Verbindungselements (13) zugeordnet ist, wobei das Sicherheitselement Verschlussmittel zum Verschließen des Verbindungselements (13) aufweist.

13. Verbindungsblock (1) zum elektrischen Verbinden von Sammelschienen, welcher eine Mehrzahl von Leiterplatten (2) aufweist, die voneinander isoliert sind, zwischen zwei Seitenwänden (4) gestapelt sind und durch die ein Klemmbolzen (5) hindurchtritt, und der ferner einen Abstandshalter (3) nach einem der vorhergehenden Ansprüche aufweist.

14. Verbindungsblock nach Anspruch 13, wobei zumindest eine der Seitenwände (4) zumindest einen gebogenen Rand (9) aufweist, der mit dem Befestigungs-/Lösemittel (8) des Abstandshalters (6) zusammenwirkt.

15. Der Verbindungsblock nach Anspruch 13 oder 14, wobei der zumindest eine gebogene Rand (9) eine Vertiefung (10) aufweist, die bevorzugt in einer Mittelposition an dem gebogenen Rand (9) angeordnet ist.

## Revendications

1. Espaceur (3) pour un boîtier de raccordement (1) pour barres omnibus, le boîtier de raccordement présentant une pluralité de plaques conductrices (2) isolées l'une de l'autre et empilées entre deux parois latérales (4), l'espaceur comprenant au moins l'un d'un élément allongé (6) prévu avec une pluralité de projections (7), s'étendant depuis un même côté dudit au moins un élément allongé (6), et prévu avec un moyen de fixation/libération (8) pour l'association/le retrait dudit au moins un élément allongé (6) dudit boîtier de raccordement (1), **caractérisé en ce que** ladite pluralité de projections de l'élément allongé est configurée pour être interposée entre, et maintenue séparée, de ladite pluralité de plaques conductrices du boîtier de raccordement.

2. Espaceur selon la revendication 1, dans lequel chaque projection de ladite pluralité de projections est configurée pour être insérée entre deux plaques conductrices adjacentes du boîtier de raccordement.

3. Espaceur selon la revendication 1 ou 2, dans lequel les projections de ladite pluralité de projections sont configurées pour être insérées dans des espaces, entre les plaques conductrices adjacentes, destinés au logement, une fois que le boîtier de raccordement a été installé, des barres conductrices d'une paire de barres omnibus contiguës, de sorte à maintenir les plaques conductrices du boîtier de raccordement séparées et en même temps soutenues.

4. Espaceur selon l'une quelconque des revendications précédentes, dans lequel les projections de ladite pluralité de projections sont profilées sous la forme d'une dent ou d'une plaque fine ou d'une paroi ou d'une chicane de séparation ou d'une protubérance.

5. Espaceur selon l'une quelconque des revendications précédentes, dans lequel ladite pluralité de projections se présente sous la forme d'un peigne ou d'une crémaillère émergeant dudit même côté de l'élément allongé, et/ou dans lequel les projections sont parallèles l'une par rapport à l'autre.

6. Espaceur selon l'une quelconque des revendications précédentes, dans lequel ladite pluralité de projections comprend un nombre de projections égal au nombre d'espaces entre les plaques conductrices adjacentes, qui est, égal au nombre de barres conductrices des barres omnibus que le boîtier de raccordement raccordera.

7. Espaceur selon l'une quelconque des revendications précédentes, dans lequel l'élément allongé est configuré pour être associé à un boîtier de raccordement, avec les projections interposées entre les plaques conductrices du boîtier de raccordement, lorsque le boîtier de raccordement n'est pas monté à une paire de barres omnibus, et pour être retiré et déplacé loin du boîtier de raccordement lorsque le boîtier de raccordement est monté, et raccorde, une paire de barres omnibus.

8. Espaceur selon l'une quelconque des revendications précédentes, dans lequel ledit moyen de fixation/libération (8) comprend au moins un élément en forme de dent s'étendant depuis le même côté que ladite pluralité de projections (7) à une partie d'extrémité dudit au moins un élément allongé (6), et/ou dans lequel l'espaceur comprend deux éléments en forme de dent s'étendant depuis le même côté que ladite pluralité de projections (7) et disposé à des parties d'extrémité opposées dudit au moins un élément allongé (6).

9. Espaceur selon l'une quelconque des revendications précédentes, comprenant un moyen de commande (11) coopérant avec ledit moyen de fixation/libération (8), incluant au moins une partie en gradin assurée à une extrémité dudit au moins un élément allongé (6).

10. Espaceur selon l'une quelconque des revendications précédentes, comprenant deux éléments allongés opposés (6) et un élément de raccordement (13) pour le raccordement entre lesdits deux éléments allongés (6).

11. Espaceur selon la revendication 10, dans lequel ledit élément de raccordement (13) comprend une première partie (16) comprise essentiellement entre lesdits, et refermée autour desdits, deux éléments allongés (6), et une seconde partie d'accrochage (17) s'étendant, par rapport à un premier élément allongé desdits deux éléments allongés (6), sur le côté opposé de ladite première partie (16).

12. Espaceur selon la revendication 11, comprenant un élément de sécurité (18) associé à ladite première partie (16) dudit élément de raccordement (13), où ledit élément de sécurité comprend un moyen de fermeture pour enfermer ledit élément de raccordement (13).

13. Boîtier de raccordement (1) pour la connexion électrique de barres omnibus, comprenant une pluralité de plaques conductrices (2), isolées l'une de l'autre, empilées entre deux parois latérales (4) et à travers lesquelles passe un boulon de serrage (5), et comprenant en outre un espaceur (3) selon l'une quelconque des revendications précédentes.

14. Boîtier de raccordement selon la revendication 13, dans lequel au moins l'une desdites parois latérales (4) présente au moins un bord plié (9) coopérant avec ledit moyen de fixation/libération (8) dudit espaceur (6).

15. Boîtier de raccordement selon la revendication 13 ou 14, dans lequel ledit au moins un bord plié (9) présente un renfoncement (10), disposé préférablement dans une partie médiane sur ledit bord plié (9).
